(19) Europäisches Patentamt
European Patent Office
Office européen des brevets

(11) EP 0 736 320 A1

(12) **EUROPÄISCHE PATENTANMELDUNG**

(43) Veröffentlichungstag:
**09.10.1996 Patentblatt 1996/41**

(51) Int. Cl.$^6$: **B01D 53/32**, B01D 53/92, B01J 19/12

(21) Anmeldenummer: **96105247.9**

(22) Anmeldetag: **02.04.1996**

(84) Benannte Vertragsstaaten:
**DE FR GB IT**

(30) Priorität: **07.04.1995 DE 19513250**

(71) Anmelder: **DORNIER GmbH**
**D-88039 Friedrichshafen (DE)**

(72) Erfinder:
- **Steinwandel, Jürgen, Dr.**
**88690 Oberuhldingen (DE)**
- **Höschele, Jörg, Dr.**
**88048 Friedrichshafen (DE)**
- **Ströer, Martin, Dr.**
**88090 Immenstaad (DE)**
- **Willneff, Rainer**
**88677 Markdorf (DE)**
- **Staneff, Theodor, Dipl.-Ing.**
**88677 Bermatingen (DE)**

(54) **Verfahren und Vorrichtung zur kontinuierlichen Entfernung von Stickoxiden in Abgasen von Verbrennungsmaschinen**

(57) Die Erfindung betrifft ein Verfahren zur kontinuierlichen Entfernung von Stickoxiden in Abgasen von Verbrennungsmaschinen mit Sauerstoffüberschuß, wobei ein reaktiver, stickstoffhaltiger Plasma-Jet in den Abgasstrom eingespeist wird. Dabei wird der Plasma-Jet durch elektromagnetische Hochfrequenzfelder erzeugt.

Fig. 1

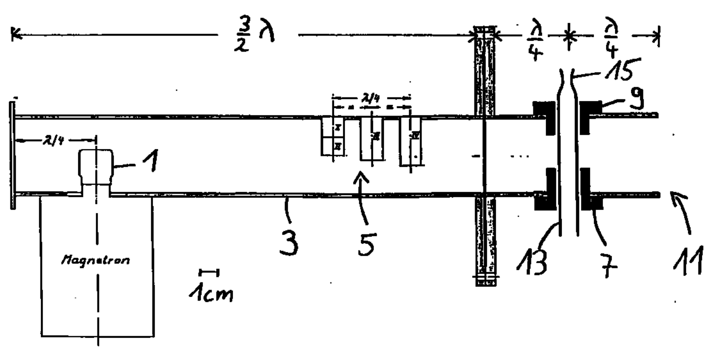


EP 0 736 320 A1

## Beschreibung

Die Erfindung betrifft ein Verfahren sowie eine Vorrichtung zur kontinuierlichen Entfernung von Stickoxiden in Abgasen von Verbrennungsmaschinen, insbesondere zur Anwendung in einem Kraftfahrzeug.

Bei der nachmotorischen Stickoxidminderung für Dieselmotoren tritt das Problem auf, daß der bei Otto-Motoren bekannte - geregelte oder ungeregelte - Dreiwegkatalysator infolge des hohen Luft-(Sauerstoff-) Überschusses nicht eingesetzt werden kann.

Ein akzeptabler technischer Stand bei der Stickoxidminderung in stark sauerstoffhaltigen Verbrennungsabgasen ist über die selektive katalytische Reduktion von $NO_x$ mit Ammoniak an heterogenen Katalysatoren im Stationärbetrieb bei Kraftwerken gegeben ($NH_3$-SCR). Als Katalysatoren haben sich praktisch ausschließlich Vollkontakte mit Trägermaterial $TiO_2$ und zusätzlich aktiver Dotierung mit $V_2O_5/WO_3$ bewährt.

Für Fahrzeuganwendungen (Otto-Magermotoren, Dieselmotoren) ist die $NH_3$-SCR-Technologie nicht ohne weiteres übertragbar. Zum einen, weil sowohl reine Ammoniak-Speichereinheiten als auch Speichereinheiten von Ammoniak-Precursoren (z.B. Harnstoff) für Fahrzeuganwendungen aufgrund erheblicher Sicherheitsbedenken problematisch sind, zum anderen weil die Katalysatoren schwierig dem dynamischen Fahrbetrieb anzupassen sind und darüber hinaus beträchtliche Regelprobleme bestehen.

Im Hinblick auf die besondere $NO_x$-Problematik bei Dieselmotoren befinden sich derzeit Katalysatoren/Verfahren in der Entwicklung, die als selektive $NO_x$-Reduktionsmittel Kohlenwasserstoffe benötigen (KW-SCR).

Entscheidende Durchbrüche in der Technologie (beispielsweise unter Verwendung von kupferhaltigen Zeolithkatalysatoren) sind derzeit nicht zu verzeichnen, auch bei der KW-SCR-Methode ist eine zielgerichtete Anpassung an den dynamischen Motorbetrieb nicht absehbar (z.B. DE 36 42 018 (1987), Petunchi et al. Appl. Catal. B2 (1993)).

Andere NO-Minderungsmaßnahmen, als Alternative zu den selektiven heterogenen-katalytischen Verfahren (Schwerpunkt Dieselmotoren) basieren auf der Tatsache, daß NO bei allen praxisrelevanten Abgasbedingungen thermodynamisch instabil bezüglich des Zerfalls in die Elemente ist ($2NO \rightarrow N_2 + O_2$). Die thermodynamisch möglichen NO-Grenzkonzentrationen werden jedoch in der Praxis nicht erreicht, was in der reaktionskinetischen Hemmung des NO-Zerfalls begründet ist. Aufgrund der hohen Aktivierungsenergie des unimolekularen Zerfalls von NO (ca. 150 kcal/mol) werden für einen raschen Zerfall Temperaturen benötigt, die in Verbrennungsabgasen in keinem Fall bereitstehen. Ganz allgemein gilt deshalb, daß rein thermische Gasphasenprozesse zur NO-Minderung in Verbrennungsabgasen (Aufheizung des gesamten Abgasstromes) aufgrund der erforderlich hohen Gastemperaturen völlig unrealistisch sind hinsichtlich einer technischen Abwendung (Materialprobleme und untolerierbare Energiekosten).

Die Möglichkeit der heterogen-katalytischen Spaltung von NO in Stickstoff und Sauerstoff ohne sonstige chemische Zusatzstoffe (Absenkung der Zerfalls-Aktivierungsenergie und damit verbunden deutliche Absenkungen der erforderlichen Reaktionstemperatur) ist in der Literatur beschrieben (z.B. Iwamoto et al., Chemistry Lett. (1990) mit metalldotierten Zeolithen; Tabata et al., J. Mat. Scie. Lett 7 (1988) mit Perowskitkatalysatoren). Für eine technische Anwendung erforderliche hinreichend hohe Reaktionsgeschwindigkeiten konnten bislang nicht erzielt werden.

Eine völlig andere Methode zur Umgehung der Restriktionen, die aus der extrem hohen Aktivierungsenergie des NO-Zerfalls folgen, besteht in folgender Reaktionssequenz:

$$NO + N^\circ \rightarrow N_2 + O^\circ \qquad (1)$$

$$O^\circ + NO \rightarrow O_2 + N^\circ \qquad (2)$$

Die Bruttoreaktion folgt aus der Addition beider Reaktionsgleichungen zu: $2NO \rightleftarrows N_2 + O_2$, was der NO-Zerfallsreaktion entspricht.

Der wesentliche Vorteil dieser Reaktionssequenz besteht darin, daß Stickstoffatome extrem selektiv mit NO reagieren und andere Radikalreaktionen diesbezüglich von sehr untergeordneter Bedeutung sind. Dieser Sachverhalt ist aus wissenschaftlicher Sicht schon vergleichsweise lang bekannt, z.B. Gmelin, Handbuch der Anorganischen Chemie Stockstoff (Lieferung 3 Verbindungen des Stickstoffs mit Sauerstoff), Verlag Chemie (1936).

Problematisch ist die Erzeugung ausreichender Mengen an primären Stickstoffradikalen (aus Stickstoff), wobei ausschließlich plasmachemische Verfahren in Betracht kommen. In der Literatur sind Verfahren beschrieben, bei denen Stickstoffradikale in ausreichenden Mengen durch Hochtemperaturspaltung von $N_2$ in thermischen Bogenplasmen erzeugt und über einen expandierenden Plasmajet in ein NO-haltiges Abgas eingespeist werden (z.B. Hilliard und Weinberg, Nature 259 (1976) und J. Steinwandel et al. BMFT 01 VQ 134 (1988). In beiden Fällen konnte das grundsätzliche Verfahren demonstriert werden. Weitergehende eigene Untersuchungen führten jedoch zu dem Schluß, daß die Elektrodenproblematik der Bogenbrenner im Hinblick auf einen technischen Betrieb nicht beherrschbar ist. Insbesondere führte der hohe Abbrand der Elektroden zu stark verminderten Standzeiten.

Der Erfindung liegt deshalb die Aufgabe zugrunde, ein Verfahren zur Entfernung von Stickoxiden durch Erzeugen und Einspeisen eines stickstoffhaltigen Plasmajets zu schaffen, mit dem die obgengenannten Nachteile im Zusammenhang mit den Elektroden vermieden werden.

Diese Aufgabe wird mit dem Verfahren nach Anspruch 1 gelöst. Vorteilhafte Ausbildungen sowie Vorrichtungen zur Durchführung des Verfahrens sind Gegenstand weiterer Ansprüche.

Erfindungsgemäß wird der Plasma-Jet durch elektromagnetische Hochfrequenzfelder erzeugt. Elektroden zur Plasmaerzeugung werden somit überhaupt nicht mehr benötigt.

Als Plasmagas können z.B. verwendet werden:
Reinstickstoff, Luft, hoch mit Stickstoff angereicherte Luft.

Darüberhinaus können in einer weiteren Ausführung die nach dem erfindungsgemäßen Verfahren gereinigten Abgase zurückgeführt und als Plasmagas verwendet werden.

Das erfindungsgemäße Verfahren eignet sich zur Stickoxidminderung in den Abgasen sämtlicher Kolbenmotoren und thermischer Strömungsmaschinen.

Hinsichtlich der technischen Anwendbarkeit des Verfahrens (Abgassysteme) sind typische Hochdruckplasmen ( $p \geqq 1$ bar) erforderlich. Bei der Plasmaerzeugung durch Hochfrequenzfelder hängt bei nichtmagnetischen Materialien die Einkopplung der HF-Energie von der komplexen Dielektrizitätskonstanten des Materials ab:

$$\varepsilon = \varepsilon' + i\varepsilon'' \qquad (3)$$

bzw. vom dielektrischen Verlustwinkel $\sigma$:

$$\tan \sigma = \varepsilon''/\varepsilon' \qquad (4)$$

$\varepsilon$ ist i.a. eine Funktion der Temperatur, und der Frequenz.

Die volumenspezifische Absorption von HF-Energie im Inneren eines HF-absorbierenden Materials ist gegeben durch:

$$P_{abs} = \pi\ \nu\ \varepsilon''\ \tan \sigma\ |E|^2 \qquad (5)$$

mit $\nu$ der Frequenz und E der mittleren elektrischen Feldstärke im absorbierenden Volumen. Für Materie, deren Verluste überwiegend durch die elektrische Leitfähigkeit definiert werden, gilt:

$$\varepsilon'' = \sigma/2\pi \cdot \nu \qquad (6)$$

mit der elektrischen Leitfähigkeit $\sigma$ in $(\Omega m)^{-1}$. Damit ergibt sich für die umsetzbare Verlustleistungsdichte:

$$P_{abs} = \frac{\sigma}{2} |E|^2 \qquad (7)$$

Das in ein absorbierendes Volumen eindringendes elektromagnetisches Feld wird durch Absorption geschwächt. Dadurch ergibt sich je nach Materie und Frequenz des e.m. Feldes eine begrenzte Eindringtiefe $d_c$:

$$d_c = c/2\pi\nu \left(\frac{2 \cdot \varepsilon_o}{\varepsilon'((1+\tan^2\delta)^{1/2} - 1)}\right)^{1/2} \qquad (8)$$

mit $c = 3 \cdot 10^8$ m/sec; Lichtgeschwindigkeit, $\varepsilon_o = 8.859 \cdot 10^{-12}$ Asec/Vm$_o$.

Bei der Plasmaerzeugung durch HF-Energie ist zu unterscheiden zwischen dem Prozess der Plasmazündung und dem Prozess der Aufrechterhaltung eines stationären Plasmas.

Bei Gasen ist die elektrische Leitfähigkeit $\sigma$ gering, so daß vergleichsweise hohe lokale Feldstärken zur Plasmazündung (Durchbruch) erforderlich sind. In Luft betragen solche Durchbruchfeldstärken zwischen 10 - 25 $\frac{kV}{cm}$.

Sobald jedoch ein solcher Plasmadurchschlag realisiert wurde, ändern sich die relevanten e.m. Stoffeigenschaften drastisch (z.B. der komplexe Brechungsindex $\varepsilon$ in Gestalt hauptsächlich des Imaginärteils $i\varepsilon''$ und damit gemäß (4) die Leitfähigkeit $\sigma$).

Insbesondere die Leitfähigkeit $\sigma$ ändert sich aufgrund des Vorliegens freier Ladungsträger um mehrere Zehnerpotenzen.

Die elektrische Leitfähigkeit eines vollionisierten Plasmas (volles thermodynamisches Gleichgewicht - VTG - oder lokales thermodynamisches Gleichgewicht - LTG -) kann in allgemeiner Form aus der Boltzmannschen Stoßgleichung unter der Annahme eines idealen Lorentz-Gases (vollionisiertes Gas, keine Elektronenwechselwirkung, ruhende Ionen) abgeleitet werden.

Es ergibt sich:

$$\sigma = 0{,}58 \frac{64\,(2\pi)^{1/2}\,\varepsilon_o^{\,2}\,k_B^{\,3/2}}{e_o^2\,(m_{el})^{1/2}\,\ln A}\,T^{3/2} \qquad (9)$$

$$A = \frac{12\,\pi\,(\varepsilon_o k_B)^{3/2}}{e_o^{\,3}}\,T^{3/2}\,N_{el}^{\,-1/2} \qquad (10)$$

($e_o$: elektrische Elementarladung, $m_{el}$: Elektronenmasse,
$N_{el}$: Teilchendichte Elektronen).
Bei VRG- und LTG-Bedingungen gilt für $N_{el}$ die Saha-Eggert-Gleichung:

$$\frac{N_{el}\,N_i^{\,+}}{N_a} = 2\,\frac{Z_i\,(T)}{Za\,(T)}\,\frac{(2\pi m_{el} k_B)^{3/2}}{h^3} \cdot T^{3/2} \exp\,(-E_i/k_B T) \qquad (11)$$

($N_i$ : Teilchendichte Ionen,
$N_a$ : Teilchendichte Neutralgasmoleküle,
$Z_{i,a}$: Systemzustandssummen,
$E_i$ : Ionisationsenergie).

Die temperaturabhängigen elektrischen Leitfähigkeiten von VTG- und LTG-Plasmen werden in erster Linie durch die Stoßquerschnitte zwischen freien Elektronen bestimmt, sind also letztlich proportional zur Anzahldichte $N_{el}$ der freien Elektronen.

Die Anwesenheit erheblicher Konzentrationen freier Ladungsträger nach erfolgter Plasmazündung beeinflußt letztlich das weitere Verhalten des stationären Plasmas bezüglich der Einkopplung (Aufrechterhaltung des Plasmazustandes) von HF-Leistung.

Es stellt sich somit die Frage nach der Ausbreitungsmöglichkeit e.m. Wellen in einem (vollionisierten) Plasma.

In solchen Medien können sich verschiedenartigste e.m. Wellen ausbilden aufgrund unterschiedlicher Eigenschaften des Elektronen- und Ionengases sowie folgender, beschleunigungswirksamer Prozesse:

- Elektrostatische (Coulomb)-Kräfte
- Magnetische (Lorentz)-Kräfte
- Kräfte resultierend aus Viskositäten (Stokes-Kräfte)
- Kräfte resultierend aus Druckgradienten.

Für den Spezialfall ausschließlicher Coulomb-Wechselwirkung ohne stationäres Magnetfeld mit den zusätzlichen Randbedingungen verschwindender Dämpfung, $\sigma \to \infty$, Ladungserhaltung und Quasi-Neutralität im Plasma gilt für ebene e.m. Wellen:

$$\Delta E - (\omega_p^{\,2}/c^2)\,E - \frac{1}{c^2}\,\partial^2 E/\partial t^2 = 0 \qquad (12)$$

mit der Dispersionsrelation:

$$\omega_p = (N_{el}\,e_o^{\,2}/(m_{el}\,\varepsilon_o))^{1/2} \qquad (13)$$

$\omega_p$ wird als charakteristische Plasma (Langmuir)-Frequenz bezeichnet.

Danach können sich transversale elektromagnetische Wellen in einem stationären Plasma nur dann ausbreiten, wenn $\omega > \omega_p$ gilt. Für $\omega < \omega_p$ kommt es zu einem cut-off infolge Totalreflexion der einlaufenden elektromagnetischen Wellen (keine weitere HF-Energieabsorption). Eine weitere Aufheizung des Plasmas ist dann nicht mehr möglich.
Beispiel: Bei einem VTG/LTG-Stickstoffplasma unter Verwendung einer Hochfrequenz von 2,46 GHz (Haushalts-Mikrowellenmagnetrons) sind elektromagnetische Wellen dieser Frequenz ($\omega_p$) ab ca. $7{,}5 \cdot 10^{10}\ cm^{-3}$ freier Elektronenkonzentration nicht mehr ausbreitungsfähig. Dies entspricht einer Plasmatemperatur von ca. 5000 K.

Bei Anwesenheit stationärer elektrischer und magnetischer Felder werden zusätzliche Möglichkeiten für absorptive Plasmazustände (in Erweiterung zu (13)) eröffnet. Im besonders wichtigen Fall der Übertragung stationärer Magnetfelder der Induktion B sind dies die Zustände der Elektronen- und Ionenzylotronfrequenz.

Ausgehend von der Definition der Lorentz-Kraft ($F_L$ = [vxB]) und ihrer Wirkung als Zentrifugalkraft ($F_L = v^2/r$) ergibt sich allgemein für die Gyrationsfrequenz:

$$\omega_g = v/r = (e_o/m) \cdot B \qquad (14)$$

(bei einfacher Ionisierung)

m = $m_{el}$ : Elektronenzyklotronresonanz
m = $M_{Ion}$: Ionenzyklotronresonanz.

Für das Beispiel der Plasma-Erzeugungsfrequenz von 2,45 GHz (s.o.) berechnet sich die notwendige Induktion B zu 0,0876 Tesla (T) für Elektronenzyklotronresonanz.

Damit ergeben sich zusätzliche Möglichkeiten zur Plasmaaufrechterhaltung, falls tatsächlich das Langmuirkriterium (13) eine weitere Wellenausbreitung im Plasma verhindern sollte.

Die o.a. elektrodynamischen Kriterien zur Plasmazündung/Plasmaaufrechterhaltung mittels Hochfrequenz lassen sich wie folgt technisch realisieren:

Bei Verwendung typischer Radiofrequenzen (RF, ca. 10 - 100 MHz) werden hohe Feldstärken E bevorzugt durch induktive Kopplung durch eine das Probenvolumen umfassende Spule als Bestandteil eines RF-Schwingkreises erzeugt (inductive coupled plasma - ICP).

Möglich ist auch eine kapazitive RF-Einkopplung, wobei das Probenvolumen durch einen Kondensator abgeschlossen ist.

In einer besonders vorteilhaften Ausführung des erfindungsgemäßen Verfahrens werden typische Mikrowellenfrequenzen (MW-GHz-Bereich, z.B. zwischen 0,95 und 24 GHz) verwendet. Hierbei werden die elektromagnetischen Wellen vorteilhaft über Hohlleiter geführt. Diese lassen sich aufgrund ihrer genau zu definierenden Geometrie nur ganz bestimmte Wellentypen zu. Die Erzeugung der Hochfrequenz erfolgt entweder durch Magnetron-Systeme oder Wanderfeldröhren.

Zur Plasmaerzeugung mit MW-Frequenzen (z.B. 2,45 GHz) sind folgende Verfahrens-Schritte notwendig:

- Erzeugung der MW-Strahlung und Einkopplung derselben in einen Wellenleiter
- Ableitung der Welle im Wellenleiter
- Auskopplung der Welle in das Plasmagas (im folgenden auch als Plasmareaktionsgas bezeichnet.

Zur Erzeugung hoher Feldstärken bei Plasmaanwendungen haben sich folgende Konfigurationen als besonders vorteilhaft erwiesen:

- Feldverdichtung (E-Vektor) in Rechteck-Hohlleitersystemen, z.B. R26 für 2,45 GHz-Technologie ($H_{10}$-Geometrie). Erzielung zusätzliche Feldkonzentrationen im Hohlleiter durch kapazitiv wirkende Stempel (Stubs).
- Anregung elektrischer oder magnetischer Grundmodes (z.B. $E_{010}$, $H_{111}$) oder höherer Moden in Hohlraumresonatoren (zylindrisch).

In beiden Fällen ist es möglich, die zu einer stationären Plasmaerzeugung notwendige primäre Durchbruchfeldstärke zu erreichen.

Es ist darüber hinaus möglich, die zum Plasmadurchbruch notwendigen elektrischen Feldstärken durch Erhöhung der (Gas)Leitfähigkeit $\sigma$ abzusenken, beispielsweise durch Einspeisung von Elektronen/Ionen über eine geeignete Anordnung (Zündflamme, Feldemission, Hilfsplasma über Koronaentladung oder Bogen/Funkenentladung).

Weitere Möglichkeiten bestehen darin, zur Plasmazündung (Durchschlag) einen Kurzzeit-HF-Puls (Pulsbreite ca. 1 msec) dem stationären Anregungsfeld zu überlagern oder eine Druckreduzierung vorzunehmen.

Die Erfindung wird anhand zweier vorteilhafter Ausführungsbeispiele sowie zugehöriger Fig. näher erläutert. Es zeigen:

Fig. 1 eine erfindungsgemäße Vorrichtung zur Plasmajet-Erzeugung in einem R-26-Hohlleiter für 2,45 GHz - Mikrowellen.

Fig. 2 eine weitere erfindungsgemäße Vorrichtung zur Plasmajeterzeugung, durch Iriskopplung eines R-26-Hohlleiters mit einem Zylinderresonator für 2,45 GHZ-Mikrowellen.

Fig. 3 eine Darstellung der experiementellen Ergebnisse, die bei der Durchführung des erfindungsgemäßen Verfahrens erhalten wurden.

## Ausführungsbeispiel mit Rechteckhohlleiter

Die Abmessungen eines Hohlleitersystems sind entscheidend bezüglich der prinzipiellen Wellenausbreitungsmöglichkeit bei vorgegebener Frequenz. Man unterscheidet zwischen transversal-elektrischen ($E_{mn}$) und transversalmagnetischen ($H_{mn}$)-Wellen. Die Indizes m, n bezeichnen die Anzahl der Wellenmaxima (Amplituden) in x- bzw. y-Richtung. Die stabilste Wellenform in einem Rechteckhohlleiter ist die sog. $H_{10}$-Welle. Diese hat die größte kritische Wellenlänge (Grenzwellenlänge $\lambda_k$). Der Hohlleiter läßt sich daher so dimensionieren, daß keine Ausbreitung eines anderen Wellentyps möglich ist.

Die Grenzwellenlänge berechnet sich wie folgt:

$$\lambda_k = 2/[(m/a)^2 + (n/b)^2]^{1/2} \qquad (15)$$

für die $H_{10}$-Welle gilt (m = 1,n =0)

$$\lambda_k = 2 \cdot a \qquad (16)$$

Dämpfungsarme Rechteck-Hohlleitersysteme weisen im Normalfall ein Breiten- zu Höhenverhältnis a/b = 2 auf.

Es ist zusätzlich zu beachten, daß die Hohlleiterwellenlänge $\lambda_H$ größer ist als die Freiraumwellenlänge $\lambda_o$. Verlustfrei gilt:

$$\lambda_H = \lambda_o/[(1 - \lambda_o/\lambda_k)^2]^{1/2} \qquad (17)$$

Für 2,45 GHz ergibt sich somit eine Hohlleiter-Wellenlänge (R26) des $H_{10}$ - Grundmodes von 171,97 mm.

Zur Konstruktion eines Hohlleiters für stationäre Plasmaerzeugung sind folgende physikalische Randbedingungen wesentlich:

- Die Auskopplung der Mikrowelle erfolgt vorteilhaft in einem Maximum des E-Feldes
- Zum Feinabgleich können Stubs (Abstimmstifte) in definierten Abständen im Hohlleiter angeordnet werden.

Fig. 1 zeigt die Version eines R-26-Hohlleitersystems, das sich zur Herstellung stationärer Plasmen als besonders geeignet erwies. Die Breite des Hohlleiters beträgt 86,36 mm, die Höhe 43,18 mm. Die Längenmaße sind der Fig. 1 zu entnehmen.

Die vom Magnetron kommende Mikrowellenstrahlung wird über einen Abstrahlkopf 1 in den Hohlleiter 3 eingekoppelt. Im Hohlleiter 3 sind für den Feinabgleich Stubs 5 (Abstimmstifte) in definierten Abständen angeordnet. Die Auskopplung der Mikrowelle in das Plasma-Reaktionsgas erfolgt kapazitiv durch zwei Hohlstempel $\lambda_{h/4}$ 7,9 vor dem offenen Ende 11 des Hohlleiters. Durch diese beiden Hohlstempel 7,9 wird das dielektrische Reaktionsrohr 13 (z.B aus Quarz) geführt, in dem das Plasmagas enthalten ist. Das Reaktionsrohr 13 wird an seinem einen Ende abgeschlossen durch eine Konturdüse 15. Über diese Düse 15 wird das Plasmagas - nun als Plasmajet - in den zu reinigenden Abgasstrom (hier nicht eingezeichnet) eingespeist.

## Ausführungsbeispiel mit Hohlraumresonator

Die zum Zünden eines Plasmas im Abgasstrom notwendige Feldstärke kann in Hohlraumresonatoren auch bei Atmosphärendruck erzielt werden. Obwohl prinzipiell beliebige Formen und Moden möglich sind, ist der $E_{010}$ - Mode des Zylinderresonators aufgrund der Feldverteilung besonders geeignet.

Die Eigenfrequenz eines Zylinderresonators mit Radius R im $E_{010}$ - Mode ist unabhängig von dessen Länge gegeben durch

$$\nu = 2.405c/2\pi R \qquad (18)$$

Bei einer Resonanzfrequenz von 2.45 GHz ergibt dies einen Radius von 47 mm. Die Güte bei Leistungsanpassung (halbe Leerlaufgüte) berechnet sich zu

$$Q = (\sigma/\pi\varepsilon_0\nu)^{1/2}\ 2.405/(4 * (1+R/L)) \qquad (19)$$

Um den Grundmode stabil zu betreiben, darf die Länge L maximal 2R betragen. In diesem Fall ergibt sich für einen Messingresonator die Güte Q = 7750.

Aus der Güte und der Verlustleistung $P_d$ im Resonator kann die maximale Feldstärke gemäß

$$E^2 = 2Z_o / (2.405\pi\mu J_1^{\,2}(2.405))\, QP_d / LR \qquad (20)$$

berechnet werden. Es wird also eine ca. fünfzigfache Feldüberhöhung gegenüber dem R26 Hohlleiter erzielt (bei 800 W Verlustleistung ca. 9 kV/cm).

Fig. 2 zeigt eine Anordnung zur Plasmajeterzeugung mit einem Zylinderresonator.

An den beiden Stirnflächen des Zylinderresonsators 20 ist jeweils eine zentrale Kreislochblende 12,14 angeordnet. Durch diese sich gegenüberliegende Öffnungen 12,14 verläuft das Reaktionsrohr 16, in dem das Plasmagas geführt wird. Um Verschmutzungen des Resonators 20 zu vermeiden, wird für das Reaktionsrohr 16 ein Material mit geringer Mikrowellenabsorption (Quarz, $Al_2O_3$, etc...) gewählt. Parallel zur Stirnfläche des Zylinderresonators 20 verläuft ein Hohlleiter 22, z.B. ein R-26-Hohlleiter, in den die von einem Magnetron erzeugten Mikrowellen der Frequenz 2,45 GHz eingekoppelt sind. Durch diese Mikrowellensstrahlung wird der Zylinderresonator 20 angeregt, wobei die Kopplung hier über die beiden Kreislochblenden 12,14 an den Stirnseiten des Zylinderresonators 20 geschieht. Diese Kreislochblenden 12,14 dienen hier also sowohl als Koppellöcher für die Anregung des Zylinderresonators 20 wie auch zur Führung des Plasmagases. Die Lage und die Dimensionierung der Koppellöcher 12,14 können zur Leistungsanpassung variiert werden. Alternativ zur Einkoppelung über Koppellöcher kann die Anregung des Resonators auch über Antennen (induktiv oder kapazitiv) erfolgen.

Nachdem die Plasmazündung aufgrund der vom Hohlraumresonator aufgenommenen Mikrowellenenergie erfolgt ist, nimmt der Hohlraumresonator 20 keine weitere Energie von dem Hohlleiter 22 auf. Die Mikrowellenstrahlung in dem Hohlleiter 22 wird nun direkt in das Plasmagas eingekoppelt. Die Plasmazone innerhalb des Reaktionsrohrs 16 befindet sich dann nicht mehr im Bereich des Zylinderresonators 20, sondern im Bereich des Hohlleiters 22.

Das Reaktionsrohr 16 wird an seinem einen Ende abgeschlossen durch eine Konturdüse 24. Über diese Düse 24 wird das Plasmagas - nun als Plasmajet - in den zu reinigenden Abgasstrom eingespeist.

Vorteilhafte Parameter bei der Versuchsdurchführung sind:

Schwingungsmode Zylinderresonators: $E_{010}$

Schwingungsmode Hohlleiter: $H_{10}$

Hohlleiter: Rechteckhohlleiter R-26

Frequenz: 2,45 GHz

Fig. 3 zeigt die experimentellen Ergebnisseder NO-Minderung bei der Einspeisung eines $N_2$-Plasmajets in ein synthetisches Diesesabgas der Zusammensetzung 0,1% NO, 5% $O_2$ und 94,9% $N_2$. Diese Ergebnisse wurden gewonnen mit einer Vorrichtung nach Fig. 3. Der Volumenstrom des Abgases betrug $1Nm^3$.

Auf der Abszisse ist der Volumenstrom des Plasmajets aufgetragen.

Auf der Ordinate ist der NO-Umsatz aufgetragen.

## Patentansprüche

1. Verfahren zur kontinuierlichen Entfernung von Stickoxiden in Abgasen von Verbrennungsmaschinen mit Sauerstoffüberschuß, wobei ein reaktiver, stickstoffhaltiger Plasma-Jet in den Abgasstrom eingespeist wird, **dadurch gekennzeichnet**, daß der Plasma-Jet durch elektromagnetische Hochfrequenzfelder erzeugt wird.

2. Verfahren nach Anspruch 1, **dadurch gekennzeichnet**, daß zur Plasmaerzeugung Mikrowellen im Frequenzbereich zwischen **0,95 GHz und 24 GHz**, bevorzugt 2,45 GHz eingesetzt werden.

3. Verfahren nach Anspruch 2, **dadurch gekennzeichnet**, daß die Plasmaerzeugung in einem Rechteckhohlleiter (3) im $H_{10}$-Mode erfolgt.

4. Verfahren nach Anspruch 3, **dadurch gekennzeichnet**, daß die Einkopplung der Mikrowellen in das Plasmagas kapazitiv erfolgt.

5. Verfahren nach einem der vorangehenden Ansprüche, **dadurch gekennzeichnet**, daß die Erzeugung des Plasmas in einem Hohlraumresonator (20) im $E_{010}$-Mode erfolgt, wobei die Anregung des Hohlraumresonator (20) aus einem Rechteckhohlleiter (22) im $H_{10}$-Mode über Iriskopplung erfolgt.

6. Verfahren nach einem der vorangehenden Ansprüche, **dadurch gekennzeichnet**, daß der Plasmajet über eine Konturdüse(15,24) in den Abgasstrom einspeist wird.

7. Verfahren nach einem der vorangehenden Ansprüche, **dadurch gekennzeichnet**, daß das Plasma durch einen Kurzzeit-HF-Puls gezündet wird.

8. Verfahren nach einem der vorangehenden Ansprüche, **dadurch gekennzeichnet**, daß das Plasma durch elektrische Ladungsträger, die mittels Flammenionisation, Feldemission, Koronaentladung, Funkenentladung oder Bogenentladung bereitgestellt werden oder durch ionisierende korpuskular- oder elektromagnetische Strahlung gezündet wird.

9. Verfahren nach einem der vorangehenden Ansprüche, **dadurch gekennzeichnet**, daß das Plasmagas Reinststickstoff, Luft oder hoch mit Stickstoff angereicherte Luft ist.

10. Verfahren nach einem der vorangehenden Ansprüche, **dadurch gekennzeichnet**, daß das Plasmagas eine Teilstrom-Rückführung des gereinigten Abgasstroms ist.

11. Verfahren nach einem der vorangehenden Ansprüche, **dadurch gekennzeichnet**, daß die Plasmaerzeugung in stationären elektrischen und/oder magnetischen Feldern erfolgt.

12. Vorrichtung zur kontinuierlichen Entfernung von Stickoxiden in Abgasen von Verbrennungsmaschinen mit Sauerstoffüberschuß, umfassend eine Vorrichtung zur Erzeugung eines reaktiven, stickstoffhaltigen Plasma-Jets, welcher in den Abgasstrom der Verbrennungsmaschine eingespeist wird, **dadurch gekennzeichnet**, daß die Vorrichtung zur Erzeugung des Plasma-Jets folgende Elemente umfaßt:

    - eine Mikrowellenquelle
    - eine Rechteckhohlleiter (3), in der die von der Mikrowellenquelle erzeugten Mikrowellen eingekoppelt werden, und der mindestens zwei Hohlstempel (7,9) umfaßt, wobei durch die Hohlstempel (7,9) eine dielektrische Rohrleitung (13) geführt ist, die das Plasmagas enthält.

13. Vorrichtung zur kontinuierlichen Entfernung von Stickoxiden in Abgasen von Verbrennungsmaschinen mit Sauerstoffüberschuß, umfassend eine Vorrichtung zur Erzeugung eines reaktiven, stickstoffhaltigen Plasma-Jets, welcher in den Abgasstrom der Verbrennungsmaschine eingespeist wird, **dadurch gekennzeichnet**, daß die Vorrichtung zur Erzeugung des Plasma-Jets folgende Merkmale aufweist:

    - eine Mikrowellenquelle
    - eine Rechteckhohlleiter (22), in der die von der Mikrowellenquelle erzeugten Mikrowellen eingekoppelt werden,
    - einen Hohlraumresonator (20), der über Iriskopplung von der im Rechteckhohlleiter (22) geführten Mikrowellenstrahlung angeregt wird.

14. Vorrichtung nach Anspruch 13, **dadurch gekennzeichnet**, daß der Hohlraumresonator (20) ein Zylinderresonator ist, wobei an den Stirnflächen jeweils Durchbrechungen (12,14) angeordnet sind, welche als Koppellöcher für die Resonatoranregung dienen und durch welche eine dielektrische Rohrleitung (16) geführt ist, die das Plasmagas enthält.

15. Vorrichtung nach einem der vorangehenden Ansprüche 12 bis 14, **dadurch gekennzeichnet**, das an einem Ende der dielektrischen Leitung, die das Plasmagas enthält, eine Konturdüse (15,24) angeordnet ist.

16. Vorrichtung nach einem der vorangehenden Ansprüche, **dadurch gekennzeichnet**, daß der Rechteckhohlleiter (3,22) ein Hohlleiter vom Typ R-26 ist.

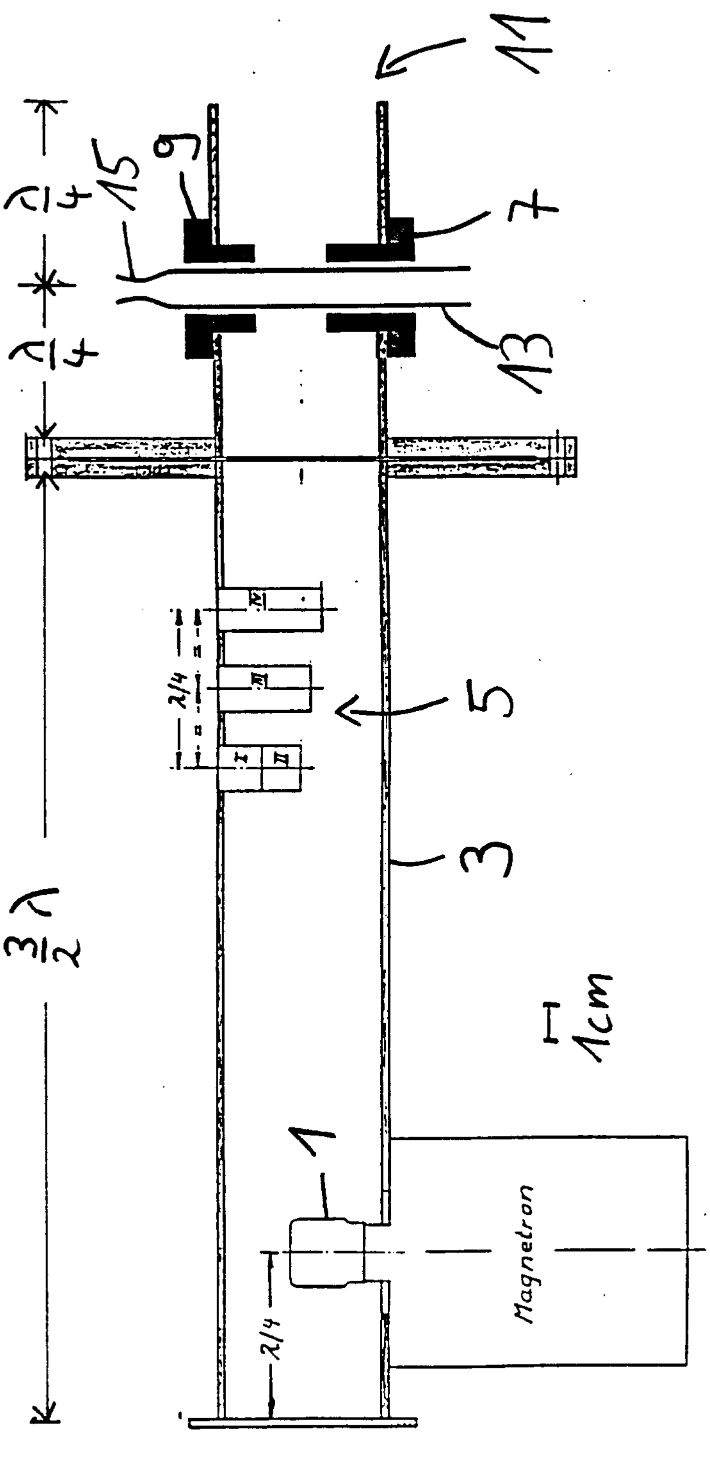


Fig. 1

Fig. 2

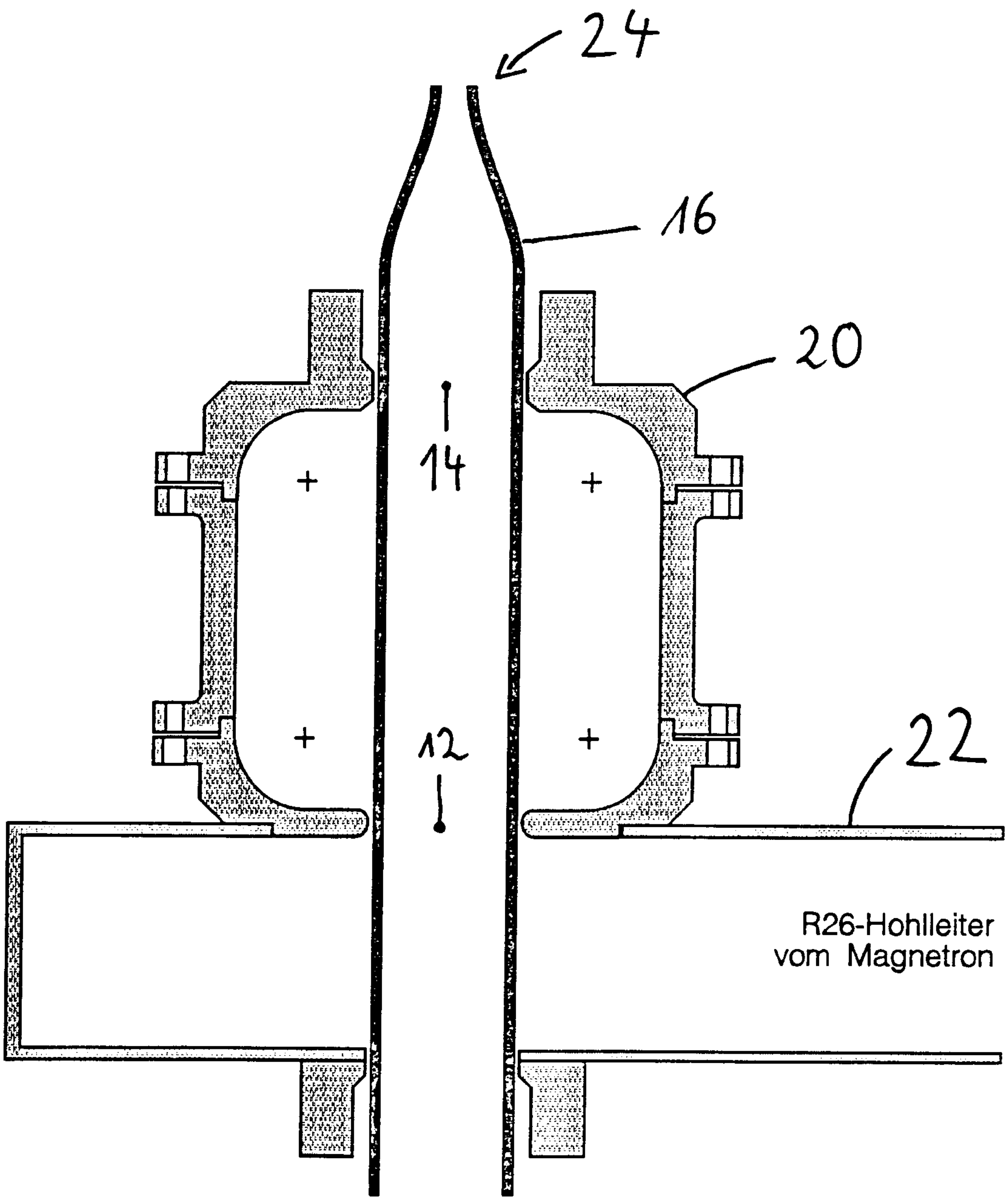

Fig. 3

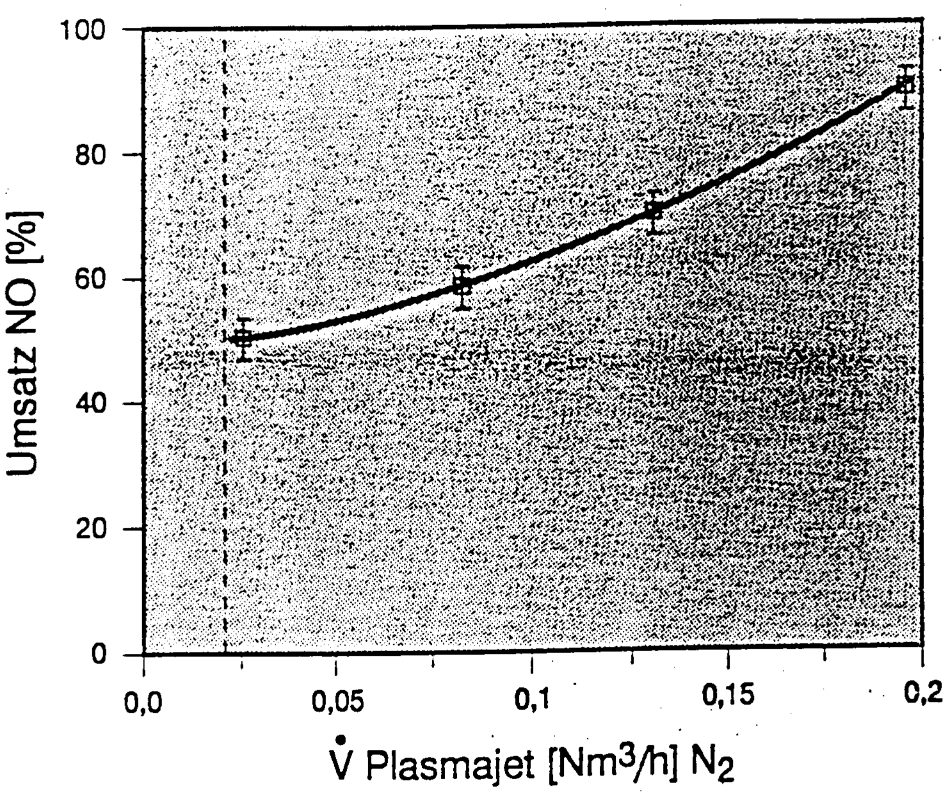

Europäisches Patentamt

# EUROPÄISCHER RECHERCHENBERICHT

Nummer der Anmeldung
EP 96 10 5247

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-A-42 36 242 (DORNIER GMBH) 28.April 1994<br>* Seite 4, Zeile 60 - Seite 5, Zeile 14 *<br>* Seite 5, Zeile 67 - Seite 6, Zeile 35; Ansprüche 1-9; Abbildungen 1,2B * | 1-16 | B01D53/32<br>B01D53/92<br>B01J19/12 |
| Y | EP-A-0 295 083 (EFTHIMION PHILIP C DR ;COTTRELL RES INC (US)) 14.Dezember 1988<br>* Seite 14, Zeile 13 - Zeile 59; Ansprüche 1-36; Abbildungen 1-10; Beispiele * | 1-16 | |
| A | DE-A-39 00 005 (RUHRGAS AG) 5.Juli 1990<br>* das ganze Dokument * | 1,8,9 | |
| A | DE-A-40 28 720 (INTERATOM) 11.April 1991<br>* Ansprüche 1-10; Abbildung 1 * | 1,2,7,8, 12,13 | |
| A | WO-A-91 03315 (US GOVERNMENT) 21.März 1991<br>* Ansprüche 1-12; Abbildungen 1-6 * | 1,8,12, 13 | |

RECHERCHIERTE SACHGEBIETE (Int.Cl.6)
B01D
B01J

Der vorliegende Recherchenbericht wurde für alle Patentansprüche erstellt

| Recherchenort | Abschlußdatum der Recherche | Prüfer |
|---|---|---|
| DEN HAAG | 10.Juli 1996 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)